(19) Europäisches Patentamt
European Patent Office
Office européen des brevets

(11) **EP 2 477 042 A1**

(12) **EUROPEAN PATENT APPLICATION**

(43) Date of publication:
**18.07.2012 Bulletin 2012/29**

(51) Int Cl.:
*G01S 15/10* (2006.01)     *G01S 15/42* (2006.01)

(21) Application number: **11305048.8**

(22) Date of filing: **17.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Université Montpellier 2 Sciences et Techniques**
**34090 Montpellier (FR)**

(72) Inventor: **Creuze, Vincent**
**34980, COMBAILLAUX (FR)**

(74) Representative: **Pontet, Bernard et al**
**Pontet Allano & Associés**
**25, rue Jean Rostand**
**Parc Club Orsay Université**
**91893 Orsay Cedex (FR)**

(54) **Method and device for measuring distance and orientation using a single electro-acoustic transducer**

(57) The present invention concerns a method for determining a distance and an inclination angle of a surface, using an electro-acoustic transducer with a diffraction pattern comprising at least a main emission lobe around the emission axis of the transducer and a side emission lobe, comprising steps of (i) emitting an acoustic excitation signal toward said surface with said electro-acoustic transducer being disposed with an orientation angle so that at least a part of the signal emitted in the side lobe is incident on the surface with an incidence angle smaller than the average incidence angle of the signal emitted in the main lobe, (ii) collecting an echo signal scattered back to the electro-acoustic transducer by the surface, (iii) identifying in said echo signal a local maximum corresponding to a round trip time of the side lobe signal, and a local maximum corresponding to a round trip time of the main lobe signal, and (iv) calculating the inclination angle and the distance of the surface by taking into account the angular shift of the local maximum of the main lobe signal relative to the emission axis of the transducer.

The present invention concerns also a device implementing the method and a system using the device and the method

Figure 2

EP 2 477 042 A1

**Description**

**Field of the invention**

The invention relates to a method for measuring the distance and the orientation of a surface using a single electro-acoustic transducer such as an ultrasound ranging system.

It relates also to a device implementing the method, and vehicles using the device and the method.

The field of the invention is the acoustic detection of the environment and the control of automated vehicles.

**Background of the invention**

Underwater vehicles such as Autonomous Underwater Vehicles (AUV) and Remotely Operated Vehicles (ROV) are more and more widely used for industrial application as well as military applications.

The applications include tasks performed in environments unfriendly to humans (dangerous environments, deep water), but also tasks which allow a large degree of automation.

One of the applications of underwater vehicles is wall inspection. It consists in navigating at constant distance and orientation from a wall to monitor the state of the inspected structure. During the mission, the vehicle performs video or sonar imaging. Examples of such application include water retention dam inspection for instance for detecting cracks, and ship hull inspection which may be performed to detect mines or structure weaknesses.

An automation of wall or ship hull following function may be desirable either to assist the ROV's pilot or to perform full automatic inspection with an AUV.

Performing such automatic wall or ship hull inspection requires measuring or sensing the wall distance and preferably also the wall orientation relative to the vehicle.

Several approaches have been developed to perform this task.

Some methods rely on digital imaging associated with laser triangulation. However, the measuring range may be limited due to the turbidity of the water.

Other methods rely on acoustic sensing.

We know for instance methods in which the distance and orientation of a wall is obtained by achieving segmentation of images acquired by sector scanning sonars.

We know also methods using phased arrays of transducers and sensors and frequency chirp techniques.

Other techniques use differences of time-of-flight with two or more transducers, and have been implemented on underwater vehicles as well as on terrestrial vehicles.

These approaches are well suited to the underwater environment but have several disadvantages:

- They need usually expensive and quite large sensors, or at least several transducers;
- They also use a quite broad range of acoustic frequencies. This is a disadvantage when several vehicles evolve in the same area, and have to share the available bandwidth. This is also a disadvantage for stealth devices in military applications;
- Measurements with a high repetition rate are not easily achieved.

We know the document from V. Creuze, B. Jouvencel, and P. Baccou, "Using Sound Diffraction to Determine the Seabed Slope," IEEE IROS 2005, pp. 1731-1736, which proposes a method for finding out both distance and orientation of the seabed (or of any locally flat surface like wall, ship hull...) using a single transducer fitted on an underwater vehicle. However, as it will be shown later, the proposed signal processing scheme does not work properly enough to allow a practical implementation.

It is an object of the invention to provide a method for finding out both distance and orientation of a surface such as the seabed (or of any locally flat surface like wall, ship hull...) from a single electro-acoustic transducer, and allowing fast and accurate measurements with a low-cost device.

**Summary of the invention**

Such objects are accomplished through a method for determining a distance $d$ and an inclination angle $\psi$ of a surface relative to a reference system $(u,v)$, using an electro-acoustic transducer with a beam pattern comprising at least a main emission lobe around the emission axis of the transducer and a side emission lobe around an angle $\theta_s$ relative to said emission axis, comprising steps of:

- emitting an acoustic excitation signal toward said surface with said electro-acoustic transducer being disposed with an orientation angle $\gamma$ so that at least a part of the signal emitted in the side lobe is incident on the surface with an incidence angle smaller than the average incidence angle of the signal emitted in the main lobe,
- collecting an echo signal scattered back to the electro-acoustic transducer by the surface,
- identifying in said echo signal a local maximum corresponding to a round trip time $t_s$ of the side lobe signal, and a local maximum corresponding to a round trip time $t_m$ of the main lobe signal,

the method further comprising a step of calculating the inclination angle $\psi$ of said surface relative to the *v* axis and the distance *d* of said surface relative to said transducer along the *u* axis, using the round trip times $t_s$ and $t_m$ , and a correction parameter $g(\psi)$ depending on the angle $\psi$ and taking into account the angular shift of the local maximum of the main lobe signal relative to the emission axis of the transducer.

According to some modes of realization, the method of the invention may further comprise a step of calculating a correction parameter $g(\psi)$ by taking into account the emission pattern of the transducer and the round-trip propagation of the acoustic signal.

It may also further comprise steps of:

- defining a round trip transfer function $H(\theta,d,\psi)$ describing the echo signal in the $\theta$ direction, where $\theta$ is the angle from the emission axis of the transducer,
- calculating an angular shift $\theta_{max}$ of the local maximum of the main lobe signal relative to the emission axis of the transducer, defined so that $dH/d\theta = 0$ for $\theta = \theta_{max}$, and
- calculating a correction parameter $g(\psi) = \theta_{max}$.

The round trip transfer function $H(\theta,d,\psi)$ may comprise a combination of the following functions:

- a function modeling the beam pattern of the transducer,
- a function modeling the transmission losses of the signal,
- a function modeling the backscattering of the surface according to Lambert's law.

According to some modes of realization, the method of the invention may further comprise:

- a step of determining parameters of the round trip transfer function $H(\theta,d,\psi)$ by measuring parameters of the diffraction pattern of the transducer,
- a preliminary step of calculating and storing correction parameters $g(\psi)$ for a plurality of values of angle $\psi$ ;
- a step of storing values of correction parameter $g(\psi)$ as polynomial coefficients.

The method of the invention may further comprise a step of calculating the angle $\psi$ by solving the equation:

$$t_s \cos(\psi - \gamma + \theta_s) - t_m \cos(\gamma - \psi + g(\psi)) = 0 \, . \qquad \text{(Eq. 1)}$$

The method of the invention may further comprise a step of emitting an acoustic excitation signal of a pulse shape, comprising a frequency content centered around one frequency.

This acoustic excitation signal may comprise an harmonic signal with a single frequency (or a sinusoidal shape) and a finite duration.

The method of the invention may still further comprise a step of positioning the electro-acoustic transducer so that the part of the signal emitted in the side lobe is incident on the surface with an average incidence angle close to zero, at least when the angle $\psi$ of the surface is close to zero.

According to another aspect, the invention comprises a device for determining a distance *d* and an inclination angle $\psi$ of a surface relative to a reference system (*u,v*), comprising:

- an electro-acoustic transducer with a beam pattern comprising at least a main emission lobe around the emission axis of the transducer and a side emission lobe around an angle $\theta_s$ relative to said emission axis,
- electronic means for emitting an acoustic excitation signal toward said surface with said electro-acoustic transducer being disposed with an orientation angle $\gamma$ so that at least a part of the signal emitted in the side lobe is incident on the surface with an incidence angle smaller than the average incidence angle of the signal emitted in the main lobe,

- electronic means for collecting an echo signal scattered back to the electro-acoustic transducer by the surface,
- computing means for identifying in said echo signal a local maximum corresponding to a round trip time $t_s$ of the side lobe signal, and a local maximum corresponding to a round trip time $t_m$ of the main lobe signal,

the device further comprising computing means for calculating the inclination angle $\psi$ of said surface relative to the $v$ axis and the distance $d$ of said surface relative to said transducer along the u axis, using the round trip times $t_s$ and $t_m$, and a correction parameter $g(\psi)$ depending on the angle $\psi$ and taking into account the angular shift of the local maximum of the main lobe signal relative to the emission axis of the transducer.

The device of the invention may further comprise an electro-acoustic transducer designed for emitting acoustic excitation signals in the ultrasound range, and for being used in one of the following medium: a liquid medium, a gaseous medium.

According to still another aspect, the invention comprises an underwater vehicle, comprising a device of the invention implementing the method of the invention.

According to still another aspect, the invention comprises a vehicle of one of the following type: ground based vehicle, airborne vehicle, comprising a device of the invention implementing the method of the invention.

It is an advantage of the invention that the data may be collected with a single "ping" or a single pulse signal around a single frequency. So the accuracy is independent of a motion estimate of the vehicle, and there is less acoustic interference with other acoustic devices in the neighborhood.

It is another advantage of the invention to allow shorter response time than with sector scanning sonars for instance. Measurements may be done at higher repetition rate.

It is still another advantage of the invention to allow the smallest size for the sensor, as well as lower cost and lower power consumption for acoustic emission.

**Description of the drawings**

The methods according to embodiments of the present invention may be better understood with reference to the drawings, which are given for illustrative purposes only and are not meant to be limiting. Other aspects, goals and advantages of the invention shall be apparent from the descriptions given hereunder.

- Figure 1 shows a directivity diagram or beam pattern of a disk-like electro-acoustic transducer;
- Figure 2 shows an overview of a vehicle featuring an electro-acoustic transducer, with the main emission lobe and the side emission lobe displayed;
- Figure 3 shows the geometrical conventions and notations used in the document;
- Figure 4 shows typical values of back scattering coefficient of a surface;
- Figure 5 shows the round trip global attenuation or transfer function of an acoustic beam from and back to the transducer;
- Figure 6 shows an example of backscattered acoustic signal as acquired by the transducer;
- Figure 7 shows the angular shift of the local maximum of the main lobe signal with the surface orientation.

**Detailed description of the invention**

A detailed description of the invention will be given, with no intention of being limitative, in the context of an implementation on an underwater vehicle to provide automated wall-following capabilities.

The key element of the invention is an electro-acoustic transducer 1 such as a piezo transducer, used for emitting ultrasound acoustic beams and detecting reflected sounds.

Considering a transducer with an emission surface of the shape of a disk with radius $r_c$ emitting sounds at a frequency $f$, the pattern of the beam emitted by such transducer taking into account diffraction effects is given by the well-known equation:

$$b(\theta) = \left[ \frac{2j_1\left(2\pi f \dfrac{r_c}{c} \sin(\theta)\right)}{2\pi f \dfrac{r_c}{c} \sin(\theta)} \right]^2 , \qquad (\text{Eq. 2})$$

where $j_1(\ )$ is the first order Bessel function, c the speed of the sound in water (about 1500 m/s), and $\theta$ the angular orientation relative to the emission axis 7 of the transducer 1.

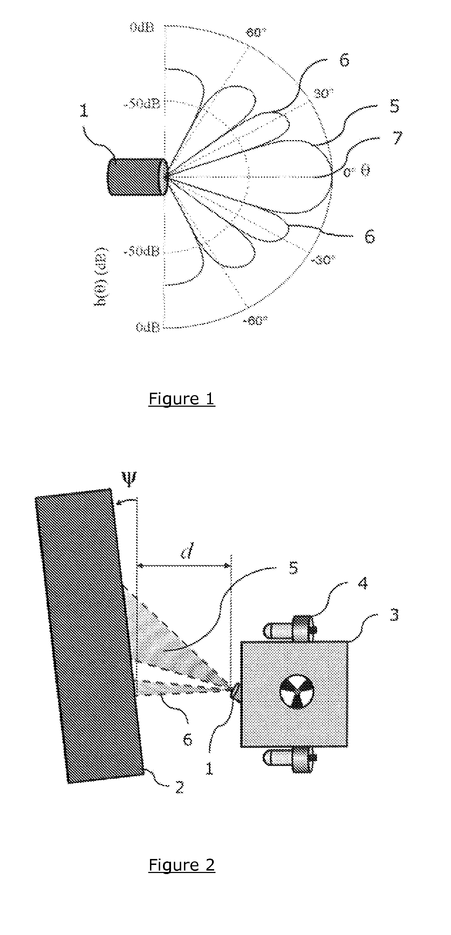

The figure 1 shows a polar representation in decibels of the beam pattern $b(\theta)$ (or directivity diagram) of the transducer 1, plotted for a transducer of radius $r_c$ = 13.5 mm emitting at a frequency $f$ = 200 kHz. This beam pattern is essentially symmetrical around the emission axis 7 of the transducer 1. It comprises a main lobe 5 and a plurality of side lobes of increasing attenuation, substantially of the shape of rings surrounding the main lobe 5. The attenuation of the first side lobe 6 relative to the main lobe in the figure is -17.7 dB. The side lobes of higher order have also higher value of attenuation, so they can be neglected in the following and the first side lobe 6 is just called the side lobe 6.

With reference to figure 2, the transducer 1 is mounted on an underwater vehicle 3 with propulsion means 4, and oriented in the direction of the surface 2 of a wall to be followed so that at least the main lobe 5 and a part of the side lobe 6 fall on that wall.

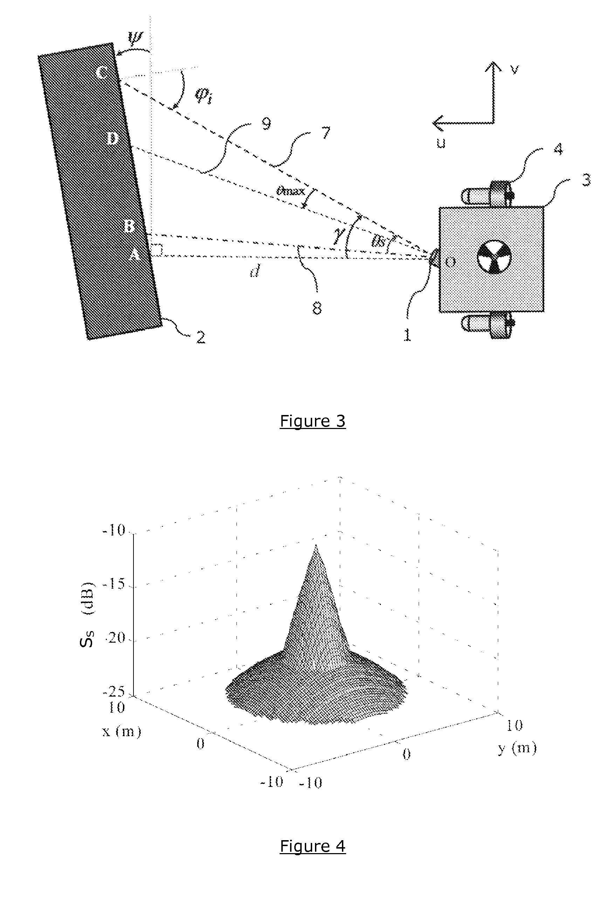

With reference to figure 3, for sake of clarity, the vehicle 3 is fitted with a reference system (*u, v*). The surface 2 of the wall in the measurement area is supposed to be inclined of an angle ψ relative to the *v* axis, and to be at a distance *d* of the transducer 1 along the *u* axis. The purpose of the method of the invention is to measure the distance *d* and the angle ψ with a single transducer 1.

The transducer 1 is oriented so that its emission axis 7 (on which the main lobe 5 is centered) forms an angle γ with the axis *u*. The angle γ is chosen so that a part of the side lobe 6, located around the side lobe axis 8, falls on the surface 2 with an incidence angle $\varphi_i$ substantially smaller than the incidence angle $\varphi_i$ of the emission axis 7.

The angle between the side lobe axis 8 and the emission axis 7, which corresponds to the angular orientation of the side lobe 6 relative to the main lobe 5 in the directivity diagram, is noted $\theta_s$.

In classical applications in which the transducer 1 is supposed to be placed with the emission axis 7 quite perpendicular to the surface 2 of the target, the side lobe 6 usually has little effect because it is very weak and hits the target with large incidence angles. However, if the transducer 1 is tilted as in the invention so that the incidence angle of the main lobe 5 is larger than that of the side lobe 6, the effect of the side lobe 6 may be considerably enhanced.

The interaction between the acoustic emission and the surface 2 of the wall of interest (which may also be the bottom of the sea in case of bottom tracking applications) can be modeled by a backscattering strength parameter $S_S$, in units of dB/m$^2$. The backscattering strength $S_S$ is defined as the ratio of the intensity scattered back toward the transducer 1 per unit area of surface 2 to the intensity of the incident signal on that surface 2. For an incidence angle $\varphi_i$ larger than a transition angle $\varphi_0$ (with $\varphi_0$ around 25˚, depending on the nature of the surface 2), a good approximation of the backscattering strength $S_S$ is given by Lambert's law:

$$S_S = S_0 + 10\log\left(\cos^2 \varphi_i\right),\qquad\qquad\text{(Eq. 3)}$$

where $S_0$ is a constant parameter depending on the surface 2 characteristics, and $\varphi_i$ is the incidence angle (relative to the normal of the surface 2).

For incidence angles $\varphi_i$ smaller than the transition angle $\varphi_0$, the reflectivity of the surface 2 is rather close to a specular regime and the backscattering strength $S_S$ can be approximated by a linear approximation:

$$S_S = S_N + \frac{\varphi_i}{\varphi_0}\left(S_0 - S_N + 10\log\left(\cos^2 \varphi_0\right)\right)\qquad\qquad\text{(Eq. 4)}$$

where So is the backscattering strength for normal incidence.

The figure 4 shows a plot of the backscattering strength $S_S$ in function of positions (*x, y*) on the surface 2, corresponding to incidence angles $\varphi_i$ of beams originating from a point source 1 above the surface 2.

As the average incidence angle $\varphi_i$ in the main lobe 5 is larger than that of the side lobe 6, the backscattering strength $S_S$ is lower for the main lobe signal than for the side lobe signal. Moreover, due to the difference in the lengths of the sound paths (for instance along the emission axis 7 and the side lobe axis 8), transmission losses $T_L$, which are essentially due to spherical spreading as the distance is short, are lower for the side lobe 6 than for the main lobe 5. Consequently, in spite of beam pattern $b(\theta)$ attenuation, the global attenuation level $H$ makes the side lobe 6 echo level significant in comparison to the main lobe 5 echo level.

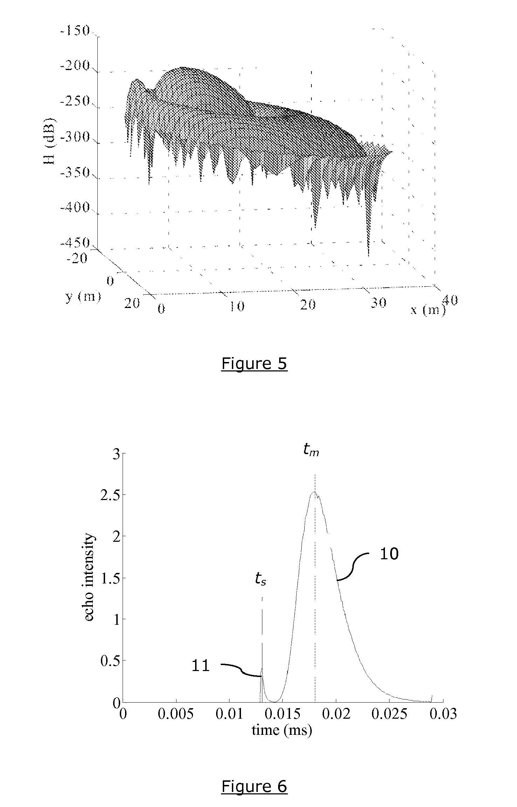

The figure 5 shows a plot of the global attenuation level $H$ in function of the positions (*x, y*) on the surface 2, corresponding to angles θ relative to the emission axis 7 of a transducer 1 in the configuration of figure 3. The global attenuation level $H$ is computed taking into account the beam pattern $b(\theta)$, the backscattering strength $S_S$ and the transmission losses $T_L$ due to spherical spreading.

The measurements made with the transducer 1 are time resolved measurements. Preferably, the transducer 1 emits a pulse signal with narrow bandwidth and duration shorter than the round trip time to the surface 2, and collects a backscattered acoustic echo representative of the orientation angle and the distance to the surface 2.

With reference to figure 6, the backscattered acoustic echo received by the transducer 1 in the configuration of figure 3 comprises two parts separated in time: a first peak 11 corresponding to the side lobe 6 and a second peak 10 corresponding to the main lobe 5.

In order to find out the orientation angle $\psi$ of the wall, an approach could be to consider that the maximum of intensity $t_s$ of the first part 11 of the echo corresponds to the axis 8 of the side lobe 6, and that the maximum of intensity $t_m$ of the second part 10 of the echo corresponds to the axis 7 of the main lobe 5. Thus, one could easily recover distance $d$ and orientation $\psi$ by simple trigonometric equations.

This is the approach described in the document of V. Creuze et al., "Using Sound Diffraction to Determine the Seabed Slope," but is leads to erroneous results. In fact, the echo of the side lobe 6 is so narrow that its maximum $t_s$ could be considered to correspond to its axis 7, but, due to spherical spreading and backscattering angle dependency, the maximum of intensity $t_m$ of the second part 10 of the echo does not correspond to the axis 8 of the main lobe 6.

Another approach could consist in analyzing the shape of the second part 10 of the echo. However, the backscattering parameter $S_0$ is *a priori* unknown. It depends on the characteristics of the reflecting surface 2 (which may be as diverse as a concrete wall, a metallic hull, the seabed...) and strongly affects the shape of the second part 10 of the echo. Thus, without a good knowledge of $S_0$, the shape analysis of the second part of the echo 10 will not lead to a precise estimation of the orientation $\psi$ of the surface 2.

The method of the invention still uses the detection of the maximum of intensity $t_s$ of the first part 11 of the echo and the detection of the maximum of intensity $t_m$ of the second part 10 of the echoes which have the advantage of being parameters easy to determine on a measured signal, but proposes an easy-to-implement processing scheme allowing the determination of orientation $\psi$ with a much better accuracy.

To explain this scheme, we first describe the echo intensity as a function of $\theta$, the angle difference with the axis 7 of the main lobe 5. The angle $\gamma$ of the transducer 1 relative to the axis $u$ (related to the vehicle 3) is supposed to be constant and known (for instance by construction). The incidence angle in the direction $\theta$ is noted $\varphi_i(\theta)$, and the distance between the transducer 1 and the surface 2 in the direction $\theta$ is noted $r(\theta)$.

Thus, we have the following relationships:

$$\varphi_i = \gamma + \theta - \psi \qquad\qquad (Eq.\ 5)$$

$$r(\theta) = d\,\frac{\cos(\psi)}{\cos(\gamma + \theta - \psi)} \qquad\qquad (Eq.\ 6)$$

We can now determine the round trip transfer function (or global attenuation function) $H(\theta,d,\psi)$ which describes the intensity of the echo in the $\theta$ direction when multiplied by the source intensity. We apply for that the following hypothesis:

- By exploiting the symmetry properties of the set-up, we restrict the developments to a 2D case (that is in a cut plane comprising the emission axis 8) which is much simpler than the 3D case, and still accurate enough;
- Absorption is neglected within transmission losses as its effect is very small in comparison with spherical spreading, keeping in mind that the measured distances in this application are less than 20 meters;
- The orientation angle $\gamma$ of the transducer 1 is chosen so that the incidence angles $\varphi_i$ of the signal on the surface 2 within the main lobe 5 are larger than the transition angle $\varphi_0$, so that Lambert's law can be applied for the main lobe's signal 10. It is also interesting to note that as the signal 11 of the side lobe 6 has incidence angles $\varphi_i$ smaller than the transition angle $\varphi_0$, the backscattering is rather in the specular regime with a much higher backscattering strength $S_S$ enhancing this part of the signal.

Thus, considering the two-way configuration of the transducer 1, the two-way spherical spreading losses and the backscattering, we have for the function defining the intensity of the echo in the $\theta$ direction:

$$H(\theta,d,\psi) = \left( \frac{2j_1\left(2\pi f \frac{r_c}{c}\sin(\theta)\right)}{2\pi f \frac{r_c}{c}\sin(\theta)} \right)^4 \frac{1}{\left(d\frac{\cos(\psi)}{\cos(\gamma+\theta-\psi)}\right)^4} i_{f0}\cos^2(\gamma+\theta-\psi)$$

(Eq. 7)

Where $i_{f0} = 10^{S0/10}$. The function $H(\theta,d,\psi)$ is the combination of three terms accounting for:

- The beam pattern $b(\theta)$ of the transducer 1,
- the transmission losses,
- The backscattering strength $S_S$ of the surface 2.

The angle $\theta_{max}$ corresponding to the maximum of $H(\theta,d,\psi)$ can be calculated by finding the angle $\theta$ for which the derivative of the function is zero:

$$\frac{dH(\theta,d,\psi)}{d\theta} = 0$$

(Eq. 8)

As the round trip time of the signal varies uniformly with angle $\theta$, this angle $\theta_{max}$ corresponds to the time location of the maximum $t_m$ in the time signal.

One can see that the equation on the derivative (Eq. 8) neither depends on the distance $d$ nor on the back-scattering parameter $S_0$, which means that the angle $\theta_{max}$ corresponding to the maximum of $H(\theta,d,\psi)$ depends only on $\psi$ (keeping in mind that other parameters $f$, $r_c$, $c$ and $\gamma$ are known constant values). Thus $\theta_{max}$ can be expressed as

$$\theta_{max} = g(\psi),$$

(Eq. 9)

where $g(\psi)$ is a nonlinear function.

In practice, equation 8 is solved numerically for a plurality of values of angle $\psi$, so as to determine a plurality of values of the function $g(\psi)$, and a polynomial approximation $\hat{g}(\psi)$ of $g(\psi)$ is computed using a numerical interpolation method.

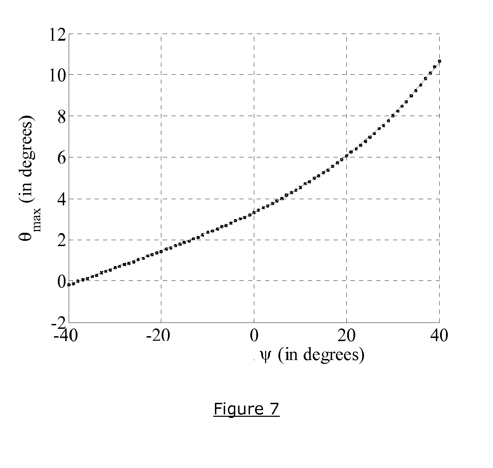

The figure 7 shows an example of function $\theta_{max} = g(\psi)$ plotted for a plurality of values of $\psi$ within the measuring range of the system, with the following parameters: $f$ = 200 KHz, $r_c$ = 10 mm, $c$ = 1500 m/s and $\gamma$ = -37.8°.

It is important to notice that the angle $\theta_{max}$ is significantly different from zero, in particular for the small angular values $\psi$ of the surface 2. This explains why the prior art method of V. Creuze et al., "Using Sound Diffraction to Determine the Seabed Slope," which corresponds to assuming $\theta_{max}$ =0, could not work properly.

As the function $g(\psi)$ and its polynomial approximation $\hat{g}(\psi)$ depend only on parameters ($f$, $r_c$, $c$ and $\gamma$) which are determined by conception, their computation can be done just one time, off-line, for a range of angle $\psi$ covering the measuring range of the system, and used during the measurements.

Once the function $g(\psi)$ is determined, it becomes easy to estimate the surface 2 orientation.

Referring to figure 3, one can express the following angles as:

$$\text{Angle}(ABO) = \frac{\pi}{2} - \psi - \gamma - \theta_s$$

(Eq. 10)

$$\mathrm{Angle}(ADO) = \frac{\pi}{2} - \psi + \gamma + \theta_{\max} \qquad\qquad \text{(Eq. 11)}$$

$$\mathrm{Angle}(OAD) = \frac{\pi}{2} + \psi \; . \qquad\qquad \text{(Eq. 12)}$$

Then, we have the following equations:

$$\frac{d}{\sin(ABO)} = \frac{c \cdot t_s/2}{\sin(OAD)} \qquad\qquad \text{(Eq. 13)}$$

$$\frac{d}{\sin(ADO)} = \frac{c \cdot t_m/2}{\sin(OAD)} \; . \qquad\qquad \text{(Eq. 14)}$$

As $c$ is the sound speed, $c \cdot t_s/2$ corresponds to the distance between the source and an impact point.
By combining (Eq. 13) and (Eq. 14) equations we obtain:

$$t_s \cos(\psi - \gamma + \theta_s) - t_m \cos(\gamma - \psi + g(\psi)) = 0 \; , \qquad\qquad \text{(Eq. 15)}$$

in which, of course, $g(\psi)$ can be replaced by its numerical approximation $\hat{g}(\psi)$.
This equation (Eq. 15) can be very easily numerically solved, in order to determine the angle $\psi$ of the surface 2.
Then, once the angle $\psi$ has been determined, the distance $d$ to the surface 2 is easily obtained by applying at least one of the equations (Eq. 13) or (Eq. 14).
The choice for the duration of the excitation signal depends on the range of distances to measure. The closest the transducer 1 from the wall 2, the shortest the signal must be in order to be able to separate the two lobes 5 and 6.
In practice, the measuring range of angle $\psi$ is in the order of -10 to +10 degrees, which is enough in the context of an application in which the orientation of the underwater vehicle 3 is maintained in closed loop around a reference value, and in which the highest accuracy is required for small values of angle $\psi$.
To summarize, a measurement process with the invention may comprise the following steps:

- In an initial configuration step, compute and store the values of functions $\hat{g}(\psi)$ of $g(\psi)$ using (Eq. 8) and the transducer's configuration parameters;
- Acquire a echo measurement;
- Apply a low-pass filtering (or any other relevant processing scheme) to the echo to extract the envelope of the echo signal;
- Detect the location of the summits $t_s$ and $t_m$ ;
- Compute the angle $\psi$ of the surface 2 using (Eq. 15);
- Compute the distance $d$ to the surface 2 using (Eq. 13) and/or (Eq. 14);
- ... And repeat the process by acquiring the next echo measurement.

According to some modes of realization:

- The function $H(\theta,d,\psi)$ may be calculated using any relevant hypothesis, or calibration data. In particular, the beam pattern $b(\theta)$ of the transducer 1 may be estimated by calibration measurements;
- The transducer 1 may be of any technology and any shape, provided that the emission pattern has a main lobe 5 and a side lobe 6 of reasonable attenuation;
- In the case where a larger measuring range of angle $\psi$ is required, the transducer 1 may be mounted on rotation stages to position it with a proper orientation relative to the surface 2;

- The invention may be implemented on a ground based or an airborne vehicle, using an ultrasound transducer operating in air. Examples of applications may include domestic automated apparatus such as vacuum cleaners, robotic toys, helicopter toys, or drones.

While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

**Claims**

1. Method for determining a distance $d$ and an inclination angle $\psi$ of a surface (2) relative to a reference system ($u$, $v$), using an electro-acoustic transducer (1) with a beam pattern comprising at least a main emission lobe (5) around the emission axis (7) of the transducer (1) and a side emission lobe (6) around an angle $\theta_s$ relative to said emission axis (7), comprising steps of:

   - emitting an acoustic excitation signal toward said surface (2) with said electro-acoustic transducer (1) being disposed with an orientation angle $\gamma$ so that at least a part of the signal emitted in the side lobe (6) is incident on the surface (2) with an incidence angle smaller than the average incidence angle of the signal emitted in the main lobe (5),
   - collecting an echo signal scattered back to the electro-acoustic transducer (1) by the surface (2),
   - identifying in said echo signal a local maximum corresponding to a round trip time $t_s$ of the side lobe signal (11), and a local maximum corresponding to a round trip time $t_m$ of the main lobe signal (10), **characterized in that** it further comprises a step of calculating the inclination angle $\psi$ of said surface (2) relative to the v axis and the distance $d$ of said surface (2) relative to said transducer (1) along the $u$ axis, using the round trip times $t_s$ and $t_m$, and a correction parameter $g(\psi)$ depending on the angle $\psi$ and taking into account the angular shift of the local maximum of the main lobe signal (10) relative to the emission axis (7) of the transducer (1).

2. Method of claim 1, **characterized in that** it further comprises a step of calculating a correction parameter $g(\psi)$ by taking into account the emission pattern of the transducer (1) and the round-trip propagation of the acoustic signal.

3. Method of claim 1 or 2, **characterized in that** it further comprises steps of:

   - defining a round trip transfer function $H(\theta,d,\psi)$ describing the echo signal in the $\theta$ direction, where $\theta$ is the angle from the emission axis (7) of the transducer (1),
   - calculating an angular shift $\theta_{max}$ of the local maximum of the main lobe signal (10) relative to the emission axis (7) of the transducer (1), defined so that $dH/d\theta = 0$ for $\theta = \theta_{max}$, and
   - calculating a correction parameter $g(\psi) = \theta_{max}$.

4. Method of claim 3, **characterized in that** the round trip transfer function $H(\theta,d,\psi)$ comprises a combination of the following functions:

   - a function modeling the beam pattern of the transducer,
   - a function modeling the transmission losses of the signal,
   - a function modeling the backscattering of the surface according to Lambert's law.

5. Method of claim 3 or 4, **characterized in that** it further comprises a step of determining parameters of the round trip transfer function $H(\theta,d,\psi)$ by measuring parameters of the diffraction pattern of the transducer (1).

6. Method of any of the preceding claims, characterized on that it comprises a preliminary step of calculating and storing correction parameters $g(\psi)$ for a plurality of values of angle $\psi$.

7. Method of claim 6, **characterized in that** it further comprises a step of storing values of correction parameter $g(\psi)$ as polynomial coefficients.

8. Method of any of the preceding claims, **characterized in that** it further comprises a step of calculating the angle ψ by solving the equation:

$$t_s \cos(\psi - \gamma + \theta_s) - t_m \cos(\gamma - \psi + g(\psi)) = 0.$$

9. Method of any of the preceding claims, **characterized in that** it further comprises a step of emitting an acoustic excitation signal of a pulse shape, comprising a frequency content centered around one frequency.

10. Method of any of the preceding claims, **characterized in that** it further comprises a step of positioning the electro-acoustic transducer (1) so that the part of the signal emitted in the side lobe (6) is incident on the surface (2) with an average incidence angle close to zero, at least when the angle ψ of the surface (2) is close to zero.

11. Device for determining a distance $d$ and an inclination angle ψ of a surface (2) relative to a reference system ($u,v$), comprising:

- an electro-acoustic transducer (1) with a beam pattern comprising at least a main emission lobe (5) around the emission axis (7) of the transducer (1) and a side emission lobe (6) around an angle $\theta_s$ relative to said emission axis (7),
- electronic means for emitting an acoustic excitation signal toward said surface (2) with said electro-acoustic transducer (1) being disposed with an orientation angle $\gamma$ so that at least a part of the signal emitted in the side lobe (6) is incident on the surface (2) with an incidence angle smaller than the average incidence angle of the signal emitted in the main lobe (5),
- electronic means for collecting an echo signal scattered back to the electro-acoustic transducer (1) by the surface (2),
- computing means for identifying in said echo signal a local maximum corresponding to a round trip time $t_s$ of the side lobe signal (11), and a local maximum corresponding to a round trip time $t_{max}$ of the main lobe signal (10), **characterized in that** it further comprises computing means for calculating the inclination angle ψ of said surface (2) relative to the $v$ axis and the distance $d$ of said surface (2) relative to said transducer (1) along the $u$ axis, using the round trip times $t_s$ and $t_{max}$, and a correction parameter $g(\psi)$ depending on the angle ψ and taking into account the angular shift of the local maximum of the main lobe signal (10) relative to the emission axis (7) of the transducer (1).

12. Device of claim 11, **characterized in that** it further comprises an electro-acoustic transducer (1) designed for emitting acoustic excitation signals in the ultrasound range, and for being used in one of the following medium: a liquid medium, a gaseous medium.

13. Underwater vehicle (3), **characterized in that** it comprises a device of claim 11 or 12 implementing the method of any of the claims 1 to 10.

14. Vehicle of one of the following type: ground based vehicle, airborne vehicle, **characterized in that** it comprises a device of claim 11 or 12 implementing the method of any of the claims 1 to 10.

Figure 1

Figure 2

Figure 3

Figure 4

Figure 5

Figure 6

Figure 7

Europäisches
Patentamt
European
Patent Office
Office européen
des brevets

## EUROPEAN SEARCH REPORT

Application Number

EP 11 30 5048

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | CREUZE V ET AL: "Using Sound Diffraction to Determine the Seabed Slope", 2005 IEEE/RSJ INTERNATIONAL CONFERENCE ON INTELLIGENT ROBOTS AND SYSTEMS; EDMONTON, AB, CANADA; 2 - 6 AUGUST 2005, IEEE, PISCATAWAY, NJ, USA, 2 August 2005 (2005-08-02), pages 1731-1736, XP010857324, DOI: DOI:10.1109/IROS.2005.1545228 ISBN: 978-0-7803-8912-0 * the whole document * ----- | 1-14 | INV. G01S15/10 G01S15/42 |
| A | CREUZE V ET AL: "Enhancing bottom tracking for AUVs by using sound diffraction", OCEANS 2005 - EUROPE BREST, FRANCE 20-23 JUNE 2005, PISCATAWAY, NJ, USA,IEEE, US, vol. 1, 20 June 2005 (2005-06-20), pages 29-34, XP010838452, ISBN: 978-0-7803-9103-1 * the whole document * ----- | 1-14 | |
| A | GEORG KANIAK ET AL: "Advanced ultrasound object detection in air by intensive use of side lobes of transducer radiation pattern", 2008 IEEE SENSORS,LECCE, ITALY, IEEE, PISCATAWAY, NJ, USA, 26 October 2008 (2008-10-26), pages 1092-1095, XP031375269, ISBN: 978-1-4244-2580-8 * the whole document * ----- | 1-14 | TECHNICAL FIELDS SEARCHED (IPC)  G01S |

The present search report has been drawn up for all claims

| Place of search | Date of completion of the search | Examiner |
|---|---|---|
| Munich | 29 June 2011 | Kern, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

**Non-patent literature cited in the description**

- **V. CREUZE ; B. JOUVENCEL ; P. BACCOU.** Using Sound Diffraction to Determine the Seabed Slope. *IEEE IROS,* 2005, 1731-1736